# EUROPÄISCHE PATENTSCHRIFT

(11) **EP 3 536 662 B1**
(45) Veröffentlichungstag und Bekanntmachung des Hinweises auf die Patenterteilung: **30.11.2022**
(21) Anmeldenummer: 18160321.8
(22) Anmeldetag: 06.03.2018
(51) Int. Cl.: C01B 3/38

(54) **VERFAHREN ZUM ENTSCHWEFELN EINES KOHLENSTOFFHALTIGEN ENERGIETRÄGERSTROMS**
METHOD FOR REMOVING SULPHUR FROM FUEL FLOW CONTAINING CARBON
PROCÉDÉ DE DÉSULFURATION D'UN COURANT PORTEUR D'ÉNERGIE CARBONÉ

(43) Veröffentlichungstag der Anmeldung: 11.09.2019
(73) Patentinhaber: Wagner, Ulrich, 06406 Bernburg (DE); Balthasar, Wolff, 40833 Ratingen (DE); Koss, Ulrich, 61348 Bad Homburg vor der Höhe (DE); Müller, Dierk, 61184 Karben (DE)
(72) Erfinder: Wagner, Ulrich, 06406 Bernburg (DE); Balthasar, Wolff, 40833 Ratingen (DE); Koss, Ulrich, 61348 Bad Homburg vor der Höhe (DE); Müller, Dierk, 61184 Karben (DE)
(74) Vertreter: Patentanwälte Bauer Vorberg Kayser

(56) Entgegenhaltungen:
- EP-A2- 0 921 585
- WO-A1-2010/120962
- DE-A1-102006 023 248
- US-A1- 2012 157 731
- US-A1- 2013 156 685
- US-A1- 2014 171 714
- US-B1- 6 447 736
- J CROSS ET AL: "PRE-REFORMING IN SYNGAS PLANTS", NITROGEN + SYNGAS, Nr. 341, 1. Juni 2016 (2016-06-01), Seiten 40-48, XP055487678,

## Beschreibung

Die Erfindung betrifft ein Verfahren zum Entschwefeln eines kohlenstoffhaltigen Energieträgerstroms mit den Merkmalen des Oberbegriffs von Anspruch 1 sowie eine Anlage zum Entschwefeln eines kohlenstoffhaltigen Energieträgerstroms mit den Merkmalen des Oberbegriffs von Anspruch 14.

Kohlenstoffhaltige Energieträger wie z. B. Erdgas weisen regelmäßig einen Anteil an Schwefel in Form von Schwefelwasserstoff (H₂S) auf. Solche Schwefelverbindungen sind regelmäßig bei der weiteren Verarbeitung des kohlenstoffhaltigen Energieträgerstroms problematisch, weil Schwefel auf Katalysatoren wie etwa Nickel, die bei einer solchen weiteren Verarbeitung des Energieträgerstroms verwendet werden können, stark giftig wirkt. Der Schwefel wird von dem Katalysator aufgenommen, sodass der Schwefel gebunden wird und gleichzeitig den Katalysator deaktiviert. Daher ist es aus dem Stand der Technik bekannt, einen kohlenstoffhaltigen Energieträgerstrom einer Entschwefelung zu unterziehen, bevor der Energieträgerstrom weiteren Verarbeitungsstufen wie etwa solchen zu einer Dampfreformierung zugeführt wird.

Die aus dem Stand der Technik bekannte EP 1 616 828 A2 beschreibt eine Vorrichtung zum adiabaten Pre-Reforming von Erdgas. Bevor das Erdgas einem Reaktor für das adiabate Pre-Reforming zugeführt wird, wird das Erdgas in einer Entschwefelungsstufe entschwefelt. Hierzu wird dem Erdgas ein Anteil von mehr als 1 % an Wasserstoff zugesetzt und einem Katalysator zum Entschwefeln durch Hydrierung zugeführt. Der Entschwefelungsstufe nachgelagert ist eine Wasserstoffrückgewinnungsstufe vorgesehen, durch die der Wasserstoff für die obige Zusetzung rückgewonnen werden kann.

Nachteilig an diesem Ansatz ist einerseits, dass neben dem Reaktor für die Hydrierung auch eine Vorrichtung sowohl für die Zusetzung des Wasserstoffs als auch für die Rückgewinnung des Wasserstoffs vorgesehen sein muss. Daneben sind für die Entschwefelung selbst auch geeignete Prozessparameter einzuhalten, welche insbesondere vom Schwefelanteil abhängig sind. Gleichzeitig muss auch gewährleistet sein, dass die Entschwefelung sehr gründlich erfolgt, da bereits vergleichsweise geringe verbleibende Konzentrationen in den nachgelagerten Stufen zu einer Katalysatorvergiftung führen können. Im Ergebnis ist diese Art der Entschwefelung sowohl umständlich als auch in ihrer Wirkung häufig langfristig unzureichend.

Die US 2012/0157731 A1 aus dem Stand der Technik beschreibt einen Vorreformierungsprozess. Vorgesehen ist das Erhitzen eines ersten Stroms, der schwere Kohlenwasserstoffe enthält, auf eine erste Temperatur, das Einbringen des erhitzten ersten Stroms in eine erste Vorreformierungskammer, wodurch ein erster vorreformierter Strom erzeugt wird. Auch vorgesehen ist das Erhitzen des ersten vorreformierten Stroms auf eine zweite Temperatur, dann das Einführen des erhitzten ersten vorreformierten Stroms in eine zweite Vorreformierungskammer, wodurch ein zweiter vorreformierter Strom erzeugt wird. Der Prozess umfasst auch das Erhitzen des zweiten vorreformierten Stroms auf eine dritte Temperatur, dann das Einführen des erhitzten zweiten vorreformierten Stroms in eine dritte Vorreformierungskammer, wodurch ein dritter vorreformierter Strom erzeugt wird.

Die US 2013/0156685 A1 aus dem Stand der Technik beschreibt ein Verfahren zum Reduzieren des Kohlendioxidhaushalts von einem Reformerofen-Rauchgas zu der Hochdruck-Synthesegas-Austrittswasser-Gas-Shift-Reaktionseinheit. Es erfolgt ein Einbringen eines erhitzten Gasgemisches in mindestens eine Vorreformierungskammer. Die Erwärmung erfolgt durch indirekten Wärmeaustausch mit einem oder mehreren SMR-Ofenabgasen oder SMR-Ofen-Synthesegasen, die das Gasgemisch in eine Standard-H2-PSA-Einheit einführen, wobei das Gasgemisch in einen mit Wasserstoff angereicherten Strom und ein PSA-Endgas getrennt wird. Es erfolgt das Einführen des PSA-Endgasstroms in ein CPU-System, wobei der PSA-Endgasstrom in einen mit Kohlendioxid angereicherten Strom, einen wasserstoffreichen Strom und einen Reststrom getrennt wird und das Einführen des Reststroms als Brennstoff in den Reformerofen zusammen mit natürlichem Gas.

Die US 2014/0171714 A1 aus dem Stand der Technik beschreibt ein Verfahren zur Vorreformierung eines kohlenwasserstoffhaltigen Stroms vor dem Eintritt in einen Dampfmethanreformer. Dieses Verfahren umfasst ein System mit zwei in Reihe geschalteten Vorreformerreaktoren, wobei ein Sauerstoffstrom mit dem teilweise reformierten Auslassstrom des ersten Vorreformerreaktors kombiniert wird und dann der kombinierte Strom in den zweiten Vorreformerreaktor eingeführt wird.

Die EP 0 921 585 A2 aus dem Stand der Technik beschreibt eine Vorrichtung zur Wasserdampfreformierung eines Kohlenwasserstoffs mit einem Verdampfer, einer Vorreformierungseinheit, einem Hauptreformer, einer CO-Entfernungseinheit und wenigstens einer katalytischen Brennereinheit. Mit dem Verdampfer stehen eine erste und mit dem Hauptreformer eine zweite Brennereinheit sowie die Vorreformierungseinheit mit der CO-Entfernungseinheit über ein jeweiliges wärmeleitendes Trennmedium in Wärmekontakt. Der Ausgang der CO-Entfernungseinheit ist mit dem Eingang der jeweiligen Brennereinheit verbindbar. Bei einem Kaltstart wird ein Aufheizvorgang durchgeführt, während dem zunächst die beiden Brennereinheiten unter externer Zuführung von Wasserstoff aktiviert werden und nachfolgend der Reformierungsbetrieb mit gegenüber dem Normalbetrieb geringerem Kohlenwasserstoffanteil gestartet und das dadurch gebildete Reformatgas statt dem extern zugeführten Wasserstoff als Brennstoff in die Brennereinheiten eingeleitet wird.

Die US 6,447,736 B1 aus dem Stand der Technik beschreibt ein System zur Wasserdampfreformierung eines Kohlenwasserstoffs, welches eine modulare Reaktoreinheit vom Typ Plattenstapel und / oder Rohrbündel umfasst und die auf integrierte Weise einen Verdampfer, eine Vorformungseinheit, einen Hauptreformer, eine CO-Entfernungseinheit und eine katalytische Brennereinheit enthält. Der Verdampfer und der Hauptreformer stehen in einem thermischen Kontakt mit der katalytischen Brennereinheit und die Vorformeinheit befindet sich in einem thermischen Kontakt mit der CO-Entfernungseinheit.

Die WO 2010/120962 A1, von welcher die vorliegende Erfindung als nächstkommend ausgeht, beschreibt ein Verfahren zur Herstellung eines wasserstoffhaltigen Produktgases durch katalytische Dampf-Kohlenwasserstoff-Reformierung mit einem Gesamt-Molverhältnis von Dampf zu Kohlenstoff zwischen 1,5 und 2,4 für das Verfahren. Der Prozessstrom wird in mindestens zwei Vorformern vor der Reaktion in katalysatorhaltigen Rohren in einem oben befeuerten Reformerofen umgesetzt. Der Prozessstrom wird im ersten Vorformer adiabatisch umgesetzt, während der Prozessstrom vor dem Einbringen in den zweiten Vorformer erwärmt erwärmt wird. Das Verfahren vermeidet die Kohlenstoffbildung am Katalysator in den katalysatorhaltigen Rohren im Primärreformer.

Ausgehend von diesem Stand der Technik besteht die Aufgabe der Erfindung darin, einen Ansatz für die Entschwefelung bereitzustellen, der sowohl mit geringerem Aufwand auskommt als auch einen zuverlässigeren Schutz der nachgelagerten Stufen vor Schwefel in dem Energieträgerstrom bietet.

Bezogen auf ein Verfahren zum Entschwefeln eines kohlenstoffhaltigen Energieträgerstroms mit den Merkmalen des Oberbegriffs von Anspruch 1 wird die Ausgabe durch die Merkmale des kennzeichnenden Teils von Anspruch 1 gelöst. Bezogen auf eine Anlage zum Entschwefeln eines kohlenstoffhaltigen Energieträgerstroms mit den Merkmalen des Oberbegriffs von Anspruch 14 wird die Ausgabe durch die Merkmale des kennzeichnenden Teils von Anspruch 14 gelöst.

Wesentlich für die Erfindung ist die Erkenntnis, dass es gerade eine zusätzliche, der eigentlichen Reaktorstufe vorgelagerte weitere Reaktorstufe für ein Pre-Reforming des Energieträgerstroms ist, welche in besonders effektiver Weise für eine Entschwefelung des Energieträgerstroms verwendet werden kann. Ein solcher Ansatz ist erstens ökonomisch, weil er lediglich die Erweiterung eines ohnehin vorgesehenen Verfahrensschritts erfordert. So erübrigt sich etwa das Zusetzen von Wasserstoff, wohingegen eine Sättigung mit Wasserdampf ja für das Pre-Reforming ohnehin vorgesehen ist. Zweitens ist dieser Ansatz aber auch deshalb besonders wirksam, weil die Art des zu schützenden Katalysators - nämlich des Katalysators in dem Reaktor für das Pre-Reforming - genau der Art des Katalysators für die Entschwefelung und damit auch der Mechanismus der Entschwefelung demjenigen der potenziellen Katalysatorvergiftung entspricht. Daher wird vermieden, dass eine falsche Einstellung der Entschwefelung gegenüber dem zu schützenden Katalysator auftritt. Dabei bindet die vorgelagerte weitere Reaktorstufe den Schwefel, was zu einer fortschreitenden Degradation des Katalysators in der vorgelagerten weiteren Reaktorstufe führt. Dadurch wird einerseits der Katalysator in der nachgelagerten Reaktorstufe wirksam geschützt und andererseits kann die verbleibende Aufnahmefähigkeit des Katalysators in der vorgelagerten weiteren Reaktorstufe anhand des Degradationsgrads des Katalysators in ihr beurteilt werden. Schließlich werden auch weitere schädliche Stoffe wie etwa Mercaptane auf diese Weise zuverlässig entfernt

Unter einem kohlenstoffhaltigen Energieträgerstrom sind hier und nachfolgend gasförmige oder flüssige Ströme mit Kohlenwasserstoffen und insbesondere mit Alkanen zu verstehen. Insbesondere zählt Erdgas, umfassend Methan, Ethan, Propan, Butan und ggf. höhere Kohlenwasserstoffe, hierzu. Der Energieträgerstrom kann neben diesen Energieträgern auch inerte Anteile wie Edelgase oder Stickstoff sowie Verunreinigungen wie etwa die zu entfernenden Schwefelverbindungen aufweisen.

Unter dem Begriff des "Pre-Reforming" wird hier und nachfolgend der an sich aus dem Stand der Technik bekannte Vorgang der adiabaten und katalytischen Dampfreformierung in einem Temperaturbereich verstanden, welcher unterhalb des Temperaturbereichs der eigentlichen Dampfreformierung liegt. Mit anderen Worten kann die an sich aus dem Stand der Technik bekannte Dampfreformierung im allgemeinen Sinne unterteilt werden in die - hier so bezeichnete - eigentliche Dampfreformierung in einem vergleichsweise höheren Temperaturbereich und das Pre-Reforming in einem vergleichsweise niedrigeren Temperaturbereich. Hier und nachfolgend bezeichnet der Begriff Dampfreformierung den Reformierungsvorgang im Allgemeinen, der Begriff Pre-Reforming eine Dampfreformierung in dem vergleichsweise niedrigen Temperaturbereich mit einer geringen Umsetzung von Methan und der Begriff eigentliche Dampfreformierung eine Dampfreformierung, bei welcher es sich nicht um ein Pre-Reforming handelt und bei welcher eine weitergehende Umsetzung von Methan stattfindet. Beide Vorgänge - also die eigentliche Dampfreformierung und das Pre-Reforming - sind auf die chemische Reaktionen zentriert, welche durch die Gleichungen CₘH₂ₙ + mH₂O <-> mCO + (m+n)H₂ einerseits und CₘH₂ₙ + 2mH₂O <-> mCO₂ + (2m+n)H₂ andererseits beschrieben werden. Sowohl die eigentliche Dampfreformierung als auch das Pre-Reforming wird durch einen entsprechenden Katalysator katalysiert. Ebenso erfolgt sowohl die eigentliche Dampfreformierung als auch das Pre-Reforming adiabat. Die Unterscheidung zwischen der eigentlichen Dampfreformierung und dem Pre-Reforming wird nachstehend erläutert.

Bei der eigentlichen Dampfreformierung wird ein mit Wasserdampf gesättigter Speisestrom an Kohlenwasserstoffen in einen Produktstrom im Wesentlichen bestehend aus Wasserstoff, Kohlenstoffmonoxid und Kohlenstoffdioxid umgewandelt. Es verbleiben nur geringe Restmengen an nicht umgewandelten Kohlenwasserstoffen. Speziell beträgt der molare Anteil an Methan des Produktstroms weniger als 10 %. Der kombinierte molare Anteil höherer Kohlenwasserstoffe des Produktstroms beträgt weniger als 1 %. Die eigentliche Dampfreformierung läuft in einem Temperaturbereich zwischen 500° C und 850° C, vorzugsweise zwischen 550° C und 850° C, ab. Dabei laufen neben den obenstehend formelmäßig genannten Reformierungsreaktionen regelmäßig auch die Methanisierung und die Wassergas-Shift-Reaktion ab. Bei dieser eigentlichen Dampfreformierung herrscht bevorzugt ein Dampf-Kohlenstoff-Verhältnis S/C zwischen 1 und 5 und insbesondere von im Wesentlichen 3.

Hingegen erfolgt das Pre-Reforming regelmäßig - und in Abgrenzung von der eigentlichen Dampfreformierung - in einem Temperaturbereich zwischen 400° C und 550° C, vorzugsweise zwischen 400° C und 500° C, ab. Es ergibt sich ein Reaktionsgleichgewicht bei dem Methan - im Gegensatz zu den höheren Kohlenwasserstoffen - nur zu einem geringeren Teil aufgespaltet wird. Vorzugsweise liegt daher der molare Anteil von Methan im Produktstrom bei mindestens 50 % und kann insbesondere auch bei mindestens 80 % liegen. Das Dampf-Kohlenstoff-Verhältnis S/C liegt beim Pre-Reforming vorzugsweise unter 3,5 und kann insbesondere auch unter 1 liegen, wobei etwa 0,3 ein möglicher Wert ist. Hierdurch bedingt erfolgt beim Pre-Reforming eine Umwandlung von Kohlenwasserstoffen mit mindestens zwei Kohlenstoffatomen durch Dampfreformierung mit einem Katalysator in Methan, Wasserstoff und Kohlenstoffoxide. Eine Umwandlung des Methans mit Wasser in Kohlenstoffmonoxid und Wasserstoff gemäß der Reformreaktion *C*₁*H*₄ + *H*₂*O* ↔ *CO* + 3*H*₂ findet also beim Pre-Reforming im Wesentlichen nicht statt, vielmehr kann die exotherme Synthese von Methan insbesondere aus den Produkten der Reformierung der höheren Kohlenwasserstoffe in umgekehrter Reaktionsrichtung erfolgen. Dies kann insbesondere dazu führen, dass der molare Anteil an Methan nach einem Pre-Reformung dadurch ansteigt, dass aus der Umwandlung der höheren Kohlenwasserstoffe Methan gebildet wird und das Methan selbst im Wesentlichen nicht aufgespaltet wird. Das Pre-Reforming kann auch dadurch gekennzeichnet sein, dass sich durch die Reaktionsbedingungen sowohl die Reformreaktion des Methans *C*₁*H*₄ + *H*₂*O* ↔ *CO* + 3*H*₂ als auch die Wassergas-Shift-Reaktion *CO* + *H*₂O ↔ *CO*₂ + *H*₂ im Wesentlichen im Reaktionsgleichgewicht befinden, sodass im Wesentlichen im Pre-Reformer nur eine Reformierung der höheren Kohlenwasserstoffe und ggf. Reaktionen stattfinden, die sich aus der resultierenden Änderung der Gleichgewichtsbedingungen ergeben.

Die Unteransprüche 2 und 3 beschreiben besonders geeignete Merkmale für einen solchen Katalysator für die Entschwefelung.

Die Unteransprüche 5 und 6 beschreiben unterschiedliche Varianten der Trennung des - vorgelagerten - Vorkatalysators von dem - nachgelagerten - Hauptkatalysator.

Die Unteransprüche 7 und 8 beschreiben die Möglichkeit, zwei vorgelagerte Reaktorstufen abwechselnd zu betreiben und so bei Degradation der einen auf die andere ohne wesentliche Unterbrechung umschalten zu können.

Schließlich beschreiben die Unteransprüche 12 und 13 das vorschlagsgemäße Verfahren im Kontext eines Verfahrens zur Synthesegasgewinnung.

Weitere Einzelheiten, Merkmale, Ausgestaltungen, Ziele und Vorteile der vorliegenden Erfindung werden nachfolgend anhand der lediglich ein Ausführungsbeispiel wiedergebenden Zeichnung erläutert. In der Zeichnung zeigt
- Fig. 1: schematisch das Fließbild einer Anlage zum Entschwefeln eines kohlenstoffhaltigen Energieträgerstroms aus dem Stand der Technik und
- Fig. 2: schematisch das Fließbild einer Anlage zur Ausführung eines Ausführungsbeispiels des vorschlagsgemäßen Verfahrens.

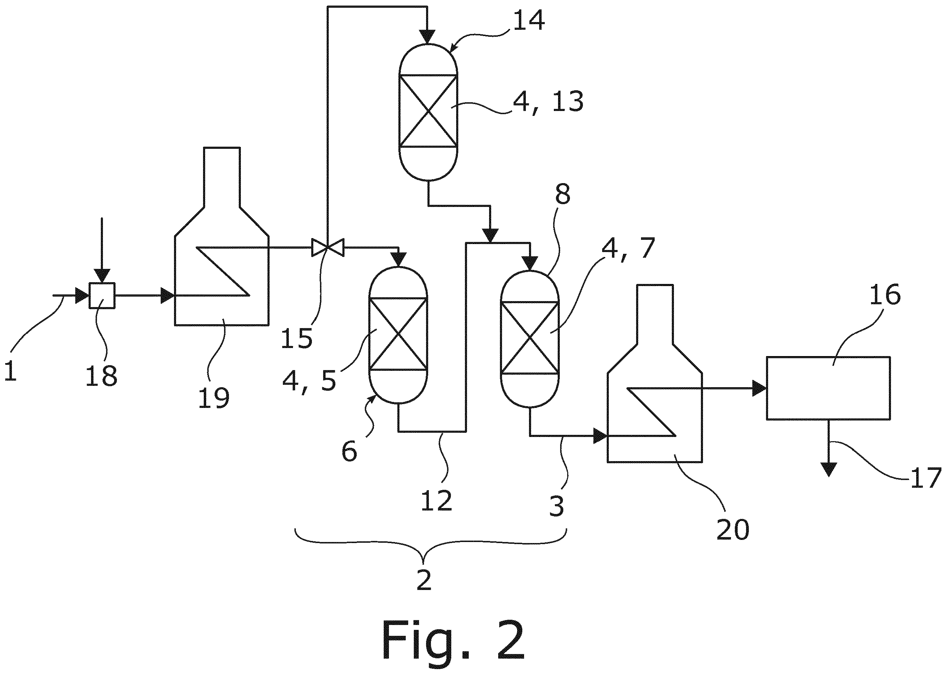

Das vorschlagsgemäße Verfahren dient dem Entschwefeln eines kohlenstoffhaltigen Energieträgerstroms 1, bei welchem es sich beispielsweise um einen Erdgasstrom handeln kann. Speziell wird das vorschlagsgemäße Verfahren durch die in der Fig. 2 dargestellte vorschlagsgemäße Anlage zum Entschwefeln des kohlenstoffhaltigen Energieträgerstroms 1 ausgeführt.

Die vorschlagsgemäße Anlage weist gemäß der Darstellung der Fig. 2 einen Pre-Reformer 2 zum Pre-Reforming des kohlenstoffhaltigen Energieträgerstroms 1 und zum Erhalten eines entschwefelten methanhaltigen Stroms 3 auf, wobei in dem Pre-Reformer 2 Kohlenwasserstoffe des Energieträgerstroms 1 mit mindestens zwei Kohlenstoffatomen durch eine Dampfreformierung in Methan, Wasserstoff und Kohlenstoffoxide aufgespaltet werden und wobei der Pre-Reformer 2 eine Katalysatoranordnung 4 zur Katalysierung der Dampfreformierung aufweist. Diese Kohlenwasserstoffe mit mindestens zwei Kohlenstoffatomen umfassen Ethan, Propan, Butan, Pentan und Hexan. Bei dieser Dampfreformierung findet auch eine Methanisierung und die Wassergas-Shift-Reaktion statt.

Die vorschlagsgemäße Anlage ist dadurch gekennzeichnet, dass die Katalysatoranordnung 4 einen Vorkatalysator 5 zur Katalysierung der Dampfreformierung in einer Vorkatalysatoraufnahme 6 des Pre-Reformers 2 und einen Hauptkatalysator 7 zur Katalysierung der Dampfreformierung in einer Hauptkatalysatoraufnahme 8 des Pre-Reformers 2 aufweist. Bei der Vorkatalysatoraufnahme 6 und der Hauptkatalysatoraufnahme 8 kann es sich dabei um eine grundsätzlich beliebige, jeweilige Struktur des Pre-Reformers 2 handeln, welche den Vorkatalysator 5 bzw. den Hauptkatalysator 7 trägt, umschließt oder auf sonstige Weise aufgenommen hat.

Die vorschlagsgemäße Anlage ist weiter dadurch gekennzeichnet, dass - wie auch in der Fig. 2 dargestellt ist - die Vorkatalysatoraufnahme 6 zu der Hauptkatalysatoraufnahme 8 beabstandet angeordnet ist und dass der Energieträgerstrom 1 die Vorkatalysatoraufnahme 6 vor der Hauptkatalysatoraufnahme 8 passiert. Anders ausgedrückt ist die Vorkatalysatoraufnahme 6 der Hauptkatalysatoraufnahme 8 prozesstechnisch vorgelagert.

Vorzugsweise erfolgt die Dampfreformierung und damit speziell das Pre-Reforming in dem Pre-Reformer 2 adiabat, wobei speziell die Dampfreformierung in der Vorkatalysatoraufnahme 6 und der Hauptkatalysatoraufnahme 8 adiabat erfolgen kann. Ebenso ist bevorzugt, dass der molare Anteil von Methan in dem methanhaltigen Strom 3 höher als der molare Anteil von Methan in dem Energieträgerstrom 1 ist. Vorzugsweise erfolgt eine Erhöhung des molaren Anteils von Methan in dem methanhaltigen Strom 3 gegenüber dem Energieträgerstrom 1 durch die Dampfreformierung in dem Pre-Reformer 2 und hier insbesondere sowohl durch die Dampfreformierung in der Vorkatalysatoraufnahme 6 als auch durch die Dampfreformierung in der Hauptkatalysatoraufnahme 8. Speziell kann es sein, dass der molare Anteil von Methan in dem methanhaltigen Strom 3 mindestens 50 % und vorzugsweise mindestens 80 % beträgt. Bevorzugt ist der methanhaltige Strom 3 im Wesentlichen frei von höheren Kohlenwasserstoffen als Methan.

Da Schwefel hochwirksam durch Chemisorption zu einer Deaktivierung speziell von Katalysatoren für die Dampfreformierung führt und somit als Katalysatorgift wirkt, bei diesem Wirken als Katalysatorgift aber durch den deaktivierten Katalysator gebunden wird, erfolgt eine entsprechende fortschreitende Vergiftung nur des Vorkatalysators 5 und es wird wirksam verhindert, dass Schwefel in wesentlichem Umfang in den Hauptkatalysator 7 gelangen kann, solange der Energieträgerstrom 1 durch den Vorkatalysator 5 geführt wird und dieser noch aufnahmefähig für den Schwefel ist.

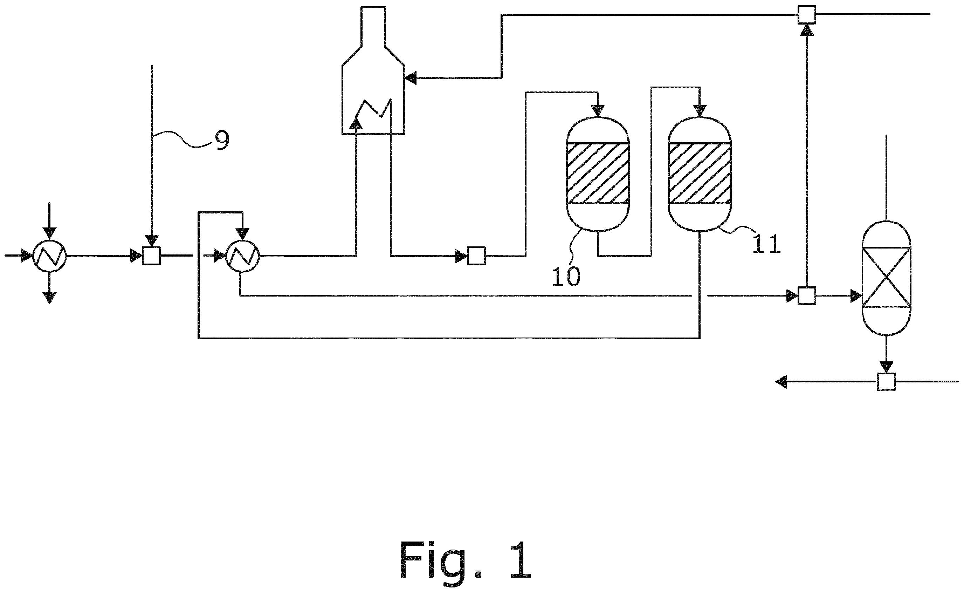

Dieses Vorgehen bietet gegenüber dem Ansatz aus dem Stand der Technik, welcher in der Fig. 1 dargestellt ist, eine Reihe von Vorteilen. Denn im Stand der Technik wird dem kohlenstoffhaltigen Energieträgerstrom 1 zunächst Wasserstoff 9 zugeführt, wobei dann in einem entsprechenden Reaktor 10 und unter Verwendung eines entsprechenden Katalysators eine Hydrierung stattfindet, sodass im Wesentlichen der gesamte Schwefel des Energieträgerstroms 1 in Schwefelwasserstoff umgesetzt wird. Regelmäßig muss dabei der Wasserstoff aufwändig aus einer PSA gewonnen werden und wäre im Grunde für den Gebrauch an einer anderen Stelle des Prozesses wertvoller. Anschließend wird der Energieträgerstrom 1 einem Auffangreaktor 11 mit Zinkoxid zugeführt, in welchem durch Bilden von festem Zinksulfat der Schwefelwasserstoff aus dem Energieträgerstrom 1 entfernt wird. Nachteilig an diesem Ansatz ist nicht nur, dass kostbarer Wasserstoff verwendet werden muss, sondern auch, dass bei einem Absinken des Schwefelanteils in dem Energieträgerstrom 1 auch das Funktionieren der Hydrierung beeinträchtigt werden kann.

Im Gegensatz dazu kommt die vorschlagsgemäße Lösung problemlos auch mit stark schwankenden Anteilen von Schwefel im Energieträgerstrom 1 zurecht. Ein weiterer Vorteil liegt darin, dass die vorschlagsgemäße Lösung auch in der Lage ist, die auch als Mercaptane bezeichneten Thioalkohole aus dem Energieträgerstrom 1 zu entfernen, was ansonsten nicht ohne Weiteres möglich ist.

Entsprechend zu der vorschlagsgemäßen Anlage wird bei dem vorschlagsgemäßen Verfahren der kohlenstoffhaltige Energieträgerstrom 1 dem Pre-Reformer 2 zum Pre-Reforming des Energieträgerstroms 1 zugeführt, wobei Kohlenwasserstoffe des Energieträgerstroms 1 mit mindestens zwei Kohlenstoffatomen in dem Pre-Reformer 2 durch eine Dampfreformierung in Methan, Wasserstoff und Kohlenstoffoxide zum Erhalten eines entschwefelten methanhaltigen Stromes 3 aufgespaltet werden. Weiter weist bei dem vorschlagsgemäßen Verfahren der Pre-Reformer 2 eine Katalysatoranordnung 4 zur Katalysierung der Dampfreformierung aufweist.

Das vorschlagsgemäße Verfahren ist dadurch gekennzeichnet, dass die Katalysatoranordnung 4 einen Vorkatalysator 5 zur Katalysierung der Dampfreformierung in einer Vorkatalysatoraufnahme 6 und einen Hauptkatalysator 7 zur Katalysierung der Dampfreformierung in einer Hauptkatalysatoraufnahme 8 aufweist, dass die Vorkatalysatoraufnahme 6 zu der Hauptkatalysatoraufnahme 8 beabstandet angeordnet ist und dass der Energieträgerstrom 1 die Vorkatalysatoraufnahme 6 vor der Hauptkatalysatoraufnahme 8 passiert.

Eine bevorzugte Ausführungsform des vorschlagsgemäßen Verfahrens und der vorschlagsgemäßen Anlage ist dadurch gekennzeichnet, dass der Vorkatalysator 5 ein Trägermaterial und ein aktives Metall aufweist, wobei das aktive Metall Nickel, Kobalt, Platin, Palladium, Iridium, Ruthenium und/oder Rhodium umfasst oder daraus besteht. Es kann weiter sein vorzugsweise, dass das Trägermaterial Aluminiumoxid oder Erdalkalimetallaluminate umfasst oder daraus besteht. Insbesondere kann es sein, dass das aktive Metall eine massenbezogene spezifische Oberfläche von mindestens 15 m^2/g aufweist.

Grundsätzlich kann der Hauptkatalysator 7 auch eine andere Materialzusammensetzung als der Vorkatalysator 5 aufweisen. Eine weitere bevorzugte Ausführungsform des vorschlagsgemäßen Verfahrens und der vorschlagsgemäßen Anlage ist jedoch dadurch gekennzeichnet, dass der Hauptkatalysator 7 ein aktives Metall aufweist, welches im Wesentlichen dem aktiven Metall des Vorkatalysators 5 entspricht. Ebenso ist bevorzugt, dass der Hauptkatalysator 7 ein Trägermaterial aufweist, welches im Wesentlichen dem Trägermaterial des Vorkatalysators 5 entspricht. So kann es insbesondere sein, dass der Hauptkatalysator 7 in seinen Materialeigenschaften im Wesentlichen dem Vorkatalysator 5 entspricht. Diese Materialeigenschaften betreffen dann nicht nur die Zusammensetzung des Hauptkatalysators 7, sondern auch Merkmale wie Porengröße etc. Auf diese Weise wird sichergestellt, dass potenziell den Hauptkatalysator 7 vergiftende Stoffe von dem Vorkatalysator 5 zuverlässig abgefangen werden.

Gemäß einer bevorzugten Ausführungsform des vorschlagsgemäßen Verfahrens und der vorschlagsgemäßen Anlage ist vorgesehen, dass die von dem Vorkatalysator 5 katalysierte Dampfreformierung bei einer Temperatur zwischen 400° C und 550° C, vorzugsweise zwischen 400° C und 500 ° C, stattfindet. Grundsätzlich kann die Dampfreformierung des Hauptkatalysators auch bei einer abweichenden Temperatur stattfinden. Bevorzugt ist jedoch, dass die von dem Hauptkatalysator 7 katalysierte Dampfreformierung bei einer Temperatur stattfindet, welche im Wesentlichen der Temperatur der von dem Vorkatalysator 5 katalysierten Dampfreformierung entspricht.

Gemäß einer weiteren bevorzugten Ausführungsform des vorschlagsgemäßen Verfahrens und der vorschlagsgemäßen Anlage ist vorgesehen, dass die Vorkatalysatoraufnahme 6 einen im Wesentlichen geschlossenen Vorreaktionsraum zur Aufnahme des Vorkatalysators 5 aufweist. Alternativ oder zusätzlich kann es sein, dass die Hauptkatalysatoraufnahme 8 ein einen im Wesentlichen geschlossenen Hauptreaktionsraum zur Aufnahme des Hauptkatalysators 7 aufweist. Vorzugsweise ist der Hauptreaktionsraum beabstandet zu dem Vorreaktionsraum. Anders ausgedrückt kann es sich - wie auch in der Fig. 2 dargestellt - bei der Vorkatalysatoraufnahme 5 um einen Vorreaktor oder eine Vorreaktorstufe handeln, welcher separat und beabstandet zu dem von der Hauptkatalysatoraufnahme 8 gebildeten Hauptreaktor oder der gebildeten Hauptreaktorstufe angeordnet ist.

Eine bevorzugte Ausführungsform des vorschlagsgemäßen Verfahrens und der vorschlagsgemäßen Anlage ist entsprechend dadurch gekennzeichnet, dass die Vorkatalysatoraufnahme 6 durch mindestens eine Wandung von der Hauptkatalysatoraufnahme 8 getrennt ist. Im Ausführungsbeispiel der Fig. 2 wird diese mindestens eine Wandung durch die Wände des Vorreaktors und des Hauptreaktors gebildet. Weiter ist bevorzugt, dass der Pre-Reformer 2 eine insbesondere rohrartige Leitungsstrecke 12 zum Führen des Energieträgerstroms 1 von der Vorkatalysatoraufnahme 6 zu der Hauptkatalysatoraufnahme 8 aufweist.

Grundsätzlich kann nur ein einzelner Vorkatalysator 5 und nur ein einzelner Hauptkatalysator 7 vorgesehen sein. Eine weitere bevorzugte Ausführungsform des vorschlagsgemäßen Verfahrens und der vorschlagsgemäßen Anlage entsprechend der Darstellung in der Fig. 2 ist speziell dadurch gekennzeichnet, dass die Katalysatoranordnung 4 einen weiteren Vorkatalysator 13 zur Katalysierung der Dampfreformierung in einer weiteren Vorkatalysatoraufnahme 14 - welche vorzugsweise von dem Pre-Reformer 2 umfasst ist - aufweist, welche weitere Vorkatalysatoraufnahme 14 beabstandet zu der Vorkatalysatoraufnahme 6 angeordnet ist und dass der Energieträgerstrom 1 durch eine schaltbare Ventilanordnung 15, welche ebenfalls bevorzugt von dem Pre-Reformer 2 umfasst ist, abwechselnd durch die Vorkatalysatoraufnahme 6 und die weitere Vorkatalysatoraufnahme 14 vor der Hauptkatalysatoraufnahme 8 geführt wird. Wie dargestellt ist die weitere Vorkatalysatoraufnahme 14 auch zu der Hauptkatalysatoraufnahme 8 beabstandet angeordnet. Auf diese Weise kann bei fortgeschrittener Schwefelaufnahme durch den Vorkatalysator 5 ein Umschalten auf den weiteren Vorkatalysator 13 erfolgen. Grundsätzlich kann der weitere Vorkatalysator 13 in verschiedener Hinsicht unterschiedlich zu dem Vorkatalysator 5 sein. Bevorzugt ist jedoch, dass der weitere Vorkatalysator 13 in seinen Materialeigenschaften im Wesentlichen dem Vorkatalysator 5 entspricht.

Gemäß einer bevorzugten Ausführungsform des vorschlagsgemäßen Verfahrens und der vorschlagsgemäßen Anlage ist vorgesehen, dass die weitere Vorkatalysatoraufnahme 14 vorzugsweise in ihrer Geometrie im Wesentlichen der Vorkatalysatoraufnahme 6 entspricht, insbesondere, dass eine Masse des Vorkatalysators 5 im Wesentlichen einer Masse des weiteren Vorkatalysators 13 entspricht. Die Entsprechung des Vorkatalysators 5 zu dem weiteren Vorkatalysator 13 geht dann über die Materialeigenschaften hinaus.

Bei dem vorschlagsgemäßen Verfahren und der vorschlagsgemäßen Anlage ist vorgesehen, dass ein Degradationsgrad des Vorkatalysators 5 gemessen wird und dass bei Überschreiten einer Degradationsschwelle durch den gemessenen Degradationsgrad die Vorkatalysatoraufnahme 6 von dem Energieträgerstrom 1 getrennt wird. Mit anderen Worten passiert der Energieträgerstrom 1 - zumindest vorübergehend - die Vorkatalysatoraufnahme 6 nicht mehr und es findet keine von dem Vorkatalysator 5 katalysierte Dampfreformierung mehr statt. Weiter ist es bevorzugt, dass nach dem Trennen der Vorkatalysatoraufnahme 6 von dem Energieträgerstrom 1 der Vorkatalysator 5 in der Vorkatalysatoraufnahme 6 durch einen frischen Vorkatalysator 5 ersetzt wird. Bei Degradation des weiteren Vorkatalysators 13 kann die Ventilanordnung 15 entsprechend wieder zurückgeschaltet werden.

Grundsätzlich kann das Trennen der Vorkatalysatoraufnahme 6 von dem Energieträgerstrom 1 auf beliebige Art und Weise erfolgen. Eine bevorzugte Ausführungsform des vorschlagsgemäßen Verfahrens und der vorschlagsgemäßen Anlage ist dadurch gekennzeichnet, dass die Vorkatalysatoraufnahme 6 dadurch von dem Energieträgerstrom 1 getrennt wird, dass durch Schalten der Ventilanordnung 15 der Energieträgerstrom 1 durch die weitere Vorkatalysatoraufnahme 14 geführt wird. Hier ist weiter bevorzugt, dass durch Schalten der Ventilanordnung 15 eine Dampfreformierung in der Vorkatalysatoraufnahme 6 beendet wird. Auf diese Weise kann der Vorkatalysator 5 in der Vorkatalysatoraufnahme 6 ersetzt werden.

Der Degradationsgrad des Vorkatalysators 5 kann prinzipiell auf beliebige Art und Weise gemessen werden. Eine weitere bevorzugte Ausführungsform des vorschlagsgemäßen Verfahrens und der vorschlagsgemäßen Anlage ist dadurch gekennzeichnet, dass das Messen des Degradationsgrads des Vorkatalysators 5 ein Messen eines Temperaturgefälles entlang eines Strömungspfads im Vorkatalysator 5 umfasst. Solange der Vorkatalysator 5 nämlich nicht degradiert ist, findet die von ihm katalysierte endotherme Dampfreformierung statt, welche zu dem Temperaturgefällte führt. Ist der Vorkatalysator 5 hingegen degradiert, sinkt die Temperatur entlang des Vorkatalysators 5 nicht mehr in dem selben Maße oder steigt womöglich sogar auf Grund von exothermen Reaktionen an. Daher ist es bevorzugt, dass die Degradationsschwelle überschritten wird, und vorzugsweise damit eine Degradation festgestellt wird, wenn das gemessene Temperaturgefälle hinsichtlich seines maximalen Betrags eine Gefälleschwelle unterschreitet. Mit anderen Worten indiziert ein geringeres Temperaturgefälle das Vorliegen einer Degradation. Ein Degradationsgrad des weiteren Vorkatalysators 13 kann auf sinngemäße gleiche Art und Weise gemessen werden.

Grundsätzlich kann der Vorkatalysator 5 eine beliebige Masse und ein beliebiges Volumen aufweisen. Bevorzugt ist es, dass der Vorkatalysator 5 und/oder der weitere Vorkatalysator 13 eine geringere Masse und/oder ein geringeres Volumen als der Hauptkatalysator 7 aufweist. Auf diese Weise muss nur eine geringere Menge an Vorkatalysator 5 ersetzt werden.

Prinzipiell kann der methanhaltige Strom 3 einer beliebigen Verwendung zugeführt werden. Gemäß der Darstellung in der Fig. 2 ist gemäß einer bevorzugten Ausführungsform des vorschlagsgemäßen Verfahrens und der vorschlagsgemäßen Anlage vorgesehen, dass der methanhaltige Strom 3 einer Synthesegasreaktoranordnung 16 zugeführt wird zum Aufspalten des Methans des methanhaltigen Stroms 3 und zum Erhalten eines Synthesegasstroms 17 mit Wasserstoff und Kohlenstoffoxiden. Bevorzugt ist hier, dass der Synthesegasstrom 17 einen molaren Anteil an Methan von weniger als 10 % aufweist. Insbesondere kann es sein, dass der Synthesegasstrom 17 im Wesentlichen frei von Kohlenwasserstoffen ist.

Gemäß einer weiteren bevorzugten Ausführungsform des vorschlagsgemäßen Verfahrens und der vorschlagsgemäßen Anlage ist vorgesehen, dass - wie auch in der Fig. 2 dargestellt - der kohlenstoffhaltige Energieträgerstrom 1 prozesstechnisch dem Pre-Reformer 2 vorgelagert einer Sättigungsvorrichtung 18 zur Anreicherung mit Wasserdampf zugeführt wird. Vorzugsweise wird der kohlenstoffhaltige Energieträgerstrom 1 prozesstechnisch dem Pre-Reformer 2 vorgelagert einer Heizanordnung 19 zum Aufheizen des Energieträgerstroms 2 zugeführt. Insbesondere kann es sein, dass der methanhaltige Strom 3 prozesstechnisch der Synthesegasreaktoranordnung 16 vorgelagert einer weiteren Heizanordnung 20 zum Aufheizen des methanhaltigen Stroms 2 zugeführt wird.

## Patentansprüche

1. Verfahren zum Entschwefeln eines kohlenstoffhaltigen Energieträgerstroms (1), wobei der kohlenstoffhaltige Energieträgerstrom (1) einem Pre-Reformer (2) zum Pre-Reforming des Energieträgerstroms (1) zugeführt wird, wobei Kohlenwasserstoffe des Energieträgerstroms (1) mit mindestens zwei Kohlenstoffatomen in dem Pre-Reformer (2) durch eine Dampfreformierung in Methan, Wasserstoff und Kohlenstoffoxide zum Erhalten eines entschwefelten methanhaltigen Stromes (3) aufgespaltet werden, wobei der Pre-Reformer (2) eine Katalysatoranordnung (4) zur Katalysierung der Dampfreformierung aufweist, wobei die Katalysatoranordnung (4) einen Vorkatalysator (5) zur Katalysierung der Dampfreformierung in einer Vorkatalysatoraufnahme (6) und einen Hauptkatalysator (7) zur Katalysierung der Dampfreformierung in einer Hauptkatalysatoraufnahme (8) aufweist, wobei die Vorkatalysatoraufnahme (6) zu der Hauptkatalysatoraufnahme (8) beabstandet angeordnet ist und wobei der Energieträgerstrom (1) die Vorkatalysatoraufnahme (6) vor der Hauptkatalysatoraufnahme (8) passiert, **dadurch gekennzeichnet, dass** ein Degradationsgrad des Vorkatalysators (5) gemessen wird und dass bei Überschreiten einer Degradationsschwelle durch den gemessenen Degradationsgrad die Vorkatalysatoraufnahme (6) von dem Energieträgerstrom (1) getrennt wird.

2. Verfahren nach Anspruch 1, **dadurch gekennzeichnet, dass** der Vorkatalysator (5) ein Trägermaterial und ein aktives Metall aufweist, wobei das aktive Metall Nickel, Kobalt, Platin, Palladium, Iridium, Ruthenium und/oder Rhodium umfasst, vorzugsweise, dass das Trägermaterial Aluminiumoxid oder Erdalkalimetallaluminate umfasst, insbesondere, dass das aktive Metall eine massenbezogene spezifische Oberfläche von mindestens 15 m^2/g aufweist.

3. Verfahren nach Anspruch 1 oder 2, **dadurch gekennzeichnet, dass** der Hauptkatalysator (7) ein aktives Metall aufweist, welches im Wesentlichen dem aktiven Metall des Vorkatalysators (5) entspricht, vorzugsweise, dass der Hauptkatalysator ein Trägermaterial aufweist, welches im Wesentlichen dem Trägermaterial des Vorkatalysators (5) entspricht, insbesondere, dass der Hauptkatalysator (7) in seinen Materialeigenschaften im Wesentlichen dem Vorkatalysator (5) entspricht.

4. Verfahren nach einem der Ansprüche 1 bis 3, **dadurch gekennzeichnet, dass** die von dem Vorkatalysator (5) katalysierte Dampfreformierung bei einer Temperatur zwischen 400° C und 550° C stattfindet, vorzugsweise, dass die von dem Hauptkatalysator (7) katalysierte Dampfreformierung bei einer Temperatur stattfindet, welche im Wesentlichen der Temperatur der von dem Vorkatalysator (5) katalysierten Dampfreformierung entspricht.

5. Verfahren nach einem der Ansprüche 1 bis 4, **dadurch gekennzeichnet, dass** die Vorkatalysatoraufnahme (6) einen im Wesentlichen geschlossenen Vorreaktionsraum zur Aufnahme des Vorkatalysators (5) aufweist und/oder dass die Hauptkatalysatoraufnahme (8) ein einen im Wesentlichen geschlossenen Hauptreaktionsraum zur Aufnahme des Hauptkatalysators (7) aufweist, vorzugsweise, wobei der Hauptreaktionsraum beabstandet zu dem Vorreaktionsraum ist.

6. Verfahren nach einem der Ansprüche 1 bis 5, **dadurch gekennzeichnet, dass** die Vorkatalysatoraufnahme (6) durch mindestens eine Wandung von der Hauptkatalysatoraufnahme (8) getrennt ist, vorzugsweise, dass der Pre-Reformer (2) eine insbesondere rohrartige Leitungsstrecke (12) zum Führen des Energieträgerstroms (1) von der Vorkatalysatoraufnahme (6) zu der Hauptkatalysatoraufnahme (8) aufweist.

7. Verfahren nach einem der Ansprüche 1 bis 6, **dadurch gekennzeichnet, dass** die Katalysatoranordnung (4) einen weiteren Vorkatalysator (13) zur Katalysierung der Dampfreformierung in einer weiteren Vorkatalysatoraufnahme (14), insbesondere des Pre-Reformers (2), aufweist, welche weitere Vorkatalysatoraufnahme (14) beabstandet zu der Vorkatalysatoraufnahme (6) angeordnet ist und dass der Energieträgerstrom (1) durch eine schaltbare Ventilanordnung (15) abwechselnd durch die Vorkatalysatoraufnahme (6) und die weitere Vorkatalysatoraufnahme (14) vor der Hauptkatalysatoraufnahme (7) geführt wird, vorzugsweise, dass der weitere Vorkatalysator (13) in seinen Materialeigenschaften im Wesentlichen dem Vorkatalysator (5) entspricht.

8. Verfahren nach einem der Ansprüche 1 bis 7, **dadurch gekennzeichnet, dass** nach dem Trennen der Vorkatalysatoraufnahme (6) von dem Energieträgerstrom (1) der Vorkatalysator (5) in der Vorkatalysatoraufnahme (6) durch einen frischen Vorkatalysator (5) ersetzt wird.

9. Verfahren nach Anspruch 8, **dadurch gekennzeichnet, dass** die Vorkatalysatoraufnahme (6) dadurch von dem Energieträgerstrom (1) getrennt wird, dass durch Schalten der Ventilanordnung (15) der Energieträgerstrom (1) durch die weitere Vorkatalysatoraufnahme (14) geführt wird, vorzugsweise, dass durch Schalten der Ventilanordnung (15) eine Dampfreformierung in der Vorkatalysatoraufnahme (6) beendet wird.

10. Verfahren nach Anspruch 8 oder 9, **dadurch gekennzeichnet, dass** das Messen des Degradationsgrads des Vorkatalysators (5) ein Messen eines Temperaturgefälles entlang eines Strömungspfads im Vorkatalysator (5) umfasst, vorzugsweise, dass die Degradationsschwelle überschritten wird, wenn das gemessene Temperaturgefälle hinsichtlich seines maximalen Betrags eine Gefälleschwelle unterschreitet.

11. Verfahren nach einem der Ansprüche 1 bis 10, **dadurch gekennzeichnet**, der Vorkatalysator (5) eine geringere Masse und/oder ein geringeres Volumen als der Hauptkatalysator (7) aufweist.

12. Verfahren nach einem der Ansprüche 1 bis 11, **dadurch gekennzeichnet, dass** der methanhaltige Strom (3) einer Synthesegasreaktoranordnung zugeführt wird zum Aufspalten des Methans des methanhaltigen Stroms (3) und Erhalten eines Synthesegasstroms (17) mit Wasserstoff und Kohlenstoffoxiden.

13. Verfahren nach einem der Ansprüche 1 bis 12, **dadurch gekennzeichnet, dass** der kohlenstoffhaltige Energieträgerstrom (19) prozesstechnisch dem Pre-Reformer (2) vorgelagert einer Sättigungsvorrichtung (18) zur Anreicherung mit Wasserdampf zugeführt wird, vorzugsweise, dass der kohlenstoffhaltige Energieträgerstrom (1) prozesstechnisch dem Pre-Reformer (2) vorgelagert einer Heizanordnung (19) zum Aufheizen des Energieträgerstroms (1) zugeführt wird, insbesondere, dass der methanhaltige Strom (3) prozesstechnisch der Synthesegasreaktoranordnung (16) vorgelagert einer weiteren Heizanordnung (20) zum Aufheizen des methanhaltigen Stroms (3) zugeführt wird.

14. Anlage zum Entschwefeln eines kohlenstoffhaltigen Energieträgerstroms (1) mit einem Pre-Reformer (2) zum Pre-Reforming des kohlenstoffhaltigen Energieträgerstroms (1) und zum Erhalten eines entschwefelten methanhaltigen Stroms (3), wobei in dem Pre-Reformer (2) Kohlenwasserstoffe des Energieträgerstroms (1) mit mindestens zwei Kohlenstoffatomen durch eine Dampfreformierung in Methan, Wasserstoff und Kohlenstoffoxide aufgespaltet werden, wobei der Pre-Reformer (2) eine Katalysatoranordnung (4) zur Katalysierung der Dampfreformierung aufweist, wobei die Katalysatoranordnung (4) einen Vorkatalysator (5) zur Katalysierung der Dampfreformierung in einer Vorkatalysatoraufnahme (6) des Pre-Reformers (2) und einen Hauptkatalysator (7) zur Katalysierung der Dampfreformierung in einer Hauptkatalysatoraufnahme (8) des Pre-Reformers (2) aufweist, wobei die Vorkatalysatoraufnahme (6) zu der Hauptkatalysatoraufnahme (8) beabstandet angeordnet ist und wobei der Energieträgerstrom (1) die Vorkatalysatoraufnahme (6) vor der Hauptkatalysatoraufnahme (8) passiert, **dadurch gekennzeichnet, dass** ein Degradationsgrad des Vorkatalysators (5) gemessen wird und dass bei Überschreiten einer Degradationsschwelle durch den gemessenen Degradationsgrad die Vorkatalysatoraufnahme (6) von dem Energieträgerstrom (1) getrennt wird.

## Claims

1. A process for the desulphurisation of a carbon-containing energy source stream (1), wherein the carbon-containing energy source stream (1) is fed to a pre-reformer (2) for pre-reforming the energy source stream (1), wherein in the pre-reformer (2), hydrocarbons from the energy source stream (1) which contain at least two carbon atoms are broken down into methane, hydrogen and oxides of carbon by means of a steam reforming reaction in order to obtain a desulphurised methane-containing stream (3), wherein the pre-reformer (2) has a catalyst arrangement (4) for the catalysis of the steam reforming reaction, wherein the catalyst arrangement (4) has a pre-catalyst (5) for the catalysis of the steam reforming reaction in a pre-catalyst vessel (6) and a main catalyst (7) for the catalysis of the steam reforming reaction in a main catalyst vessel (8), wherein the pre-catalyst vessel (6) is disposed remotely from the main catalyst vessel (8) and wherein the energy source stream (1) passes through the pre-catalyst vessel (6) before the main catalyst vessel (8), **characterized in that** a degree of degradation of the pre-catalyst (5) is measured and **in that** when the measured degree of degradation exceeds a degradation threshold, the pre-catalyst vessel (6) is isolated from the energy source stream (1).

2. The process as claimed in claim 1, **characterized in that** the pre-catalyst (5) has a support material and an active metal, wherein the active metal comprises nickel, cobalt, platinum, palladium, iridium, ruthenium and/or rhodium, preferably **in that** the support material comprises aluminium oxide or alkaline earth aluminate, in particular **in that** the active metal has a specific surface area per unit mass of at least 15 m²/g.

3. The process as claimed in claim 1 or claim 2, **characterized in that** the main catalyst (7) has an active metal which substantially corresponds to the active metal of the pre-catalyst (5), preferably **in that** the main catalyst has a support material which substantially corresponds to the support material of the pre-catalyst (5), in particular **in that** the material properties of the main catalyst (7) substantially correspond to those of the pre-catalyst (5).

4. The process as claimed in one of claims 1 to 3, **characterized in that** the steam reforming reaction catalysed by the pre-catalyst (5) takes place at a temperature between 400°C and 550°C, preferably **in that** the steam reforming reaction which is catalysed by the main catalyst (7) takes place at a temperature which substantially corresponds to the temperature of the steam reforming reaction which is catalysed by the pre-catalyst (5).

5. The process as claimed in one of claims 1 to 4, **characterized in that** the pre-catalyst vessel (6) has a substantially closed pre-reaction chamber for receiving the pre-catalyst (5) and/or **in that** the main catalyst vessel (8) has a substantially closed main reaction chamber for receiving the main catalyst (7), preferably wherein the main reaction chamber is remote from the pre-reaction chamber.

6. The process as claimed in one of claims 1 to 5, **characterized in that** the pre-catalyst vessel (6) is isolated from the main catalyst vessel (8) by at least one wall, preferably **in that** the pre-reformer (2) has a section of line (12) which in particular is tubular in order to feed the energy source stream (1) from the pre-catalyst vessel (6) to the main catalyst vessel (8) .

7. The process as claimed in one of claims 1 to 6, **characterized in that** the catalyst arrangement (4) has a further pre-catalyst (13) for the catalysis of the steam reforming reaction in a further pre-catalyst vessel (14), in particular of the pre-reformer (2), the further pre-catalyst vessel (14) being disposed remotely from the pre-catalyst vessel (6), and **in that** the energy source stream (1) is fed alternately through the pre-catalyst vessel (6) and the further pre-catalyst vessel (14) upstream of the main catalyst vessel (7) by means of a switchable valve arrangement (15), preferably **in that** the material properties of the further pre-catalyst (13) substantially correspond to those of the pre-catalyst (5).

8. The process as claimed in one of claims 1 to 7, **characterized in that** after isolating the pre-catalyst vessel (6) from the energy source stream (1), the pre-catalyst (5) in the pre-catalyst vessel (6) is replaced by a fresh pre-catalyst (5).

9. The process as claimed in claim 8, **characterized in that** the pre-catalyst vessel (6) is isolated from the energy source stream (1) in a manner such that by switching the valve arrangement (15), the energy source stream (1) is fed through the further pre-catalyst vessel (14), preferably **in that** by switching the valve arrangement (15), a steam reforming reaction in the pre-catalyst vessel (6) is stopped.

10. The process as claimed in claim 8 or claim 9, **characterized in that** the measurement of the degree of degradation of the pre-catalyst (5) comprising a measurement of a temperature gradient along a flow path in the pre-catalyst (5), preferably **in that** the degradation threshold is exceeded when the measured temperature gradient is below a gradient threshold in respect of its maximum amount.

11. The process as claimed in one of claims 1 to 10, **characterized in that** the pre-catalyst (5) has a smaller mass and/or a smaller volume than the main catalyst (7) .

12. The process as claimed in one of claims 1 to 11, **characterized in that** the methane-containing stream (3) is fed to a synthesis gas reactor arrangement in order to break down the methane of the methane-containing stream (3) and to obtain a synthesis gas stream (17) with hydrogen and oxides of carbon.

13. The process as claimed in one of claims 1 to 12, **characterized in that** the carbon-containing energy source stream (19) is fed to a saturation device (18) which is operationally upstream of the pre-reformer (2) for enrichment with steam, preferably **in that** the carbon-containing energy source stream (1) is fed to a heating arrangement (19) which is operationally upstream of the pre-reformer (2) in order to heat the energy source stream (1), in particular **in that** the methane-containing stream (3) is fed to a further heating arrangement (20) which is operationally upstream of the synthesis gas reactor arrangement (16) in order to heat up the methane-containing stream (3).

14. An installation for the desulphurisation of a carbon-containing energy source stream (1), with a pre-reformer (2) for pre-reforming the carbon-containing energy source stream (1) and for obtaining a desulphurised methane-containing stream (3), wherein in the pre-reformer (2), hydrocarbons from the energy source stream (1) which contain at least two carbon atoms are broken down into methane, hydrogen and oxides of carbon by means of a steam reforming reaction, wherein the pre-reformer (2) has a catalyst arrangement (4) for the catalysis of the steam reforming reaction, wherein the catalyst arrangement (4) has a pre-catalyst (5) for the catalysis of the steam reforming reaction in a pre-catalyst vessel (6) of the pre-reformer (2) and a main catalyst (7) for the catalysis of the steam reforming reaction in a main catalyst vessel (8) of the pre-reformer (2), wherein the pre-catalyst vessel (6) is disposed remotely from the main catalyst vessel (8) and wherein the energy source stream (1) passes through the pre-catalyst vessel (6) before the main catalyst vessel (8), **characterized in that** a degree of degradation of the pre-catalyst (5) is measured and **in that** when the measured degree of degradation exceeds a degradation threshold, the pre-catalyst vessel (6) is isolated from the energy source stream (1).

## Revendications

1. Procédé de désulfurisation d'un flux vecteur d'énergie contenant du carbone (1), le flux vecteur d'énergie contenant du carbone (1) étant introduit dans un dispositif de pré-reformage (2) afin de pré-reformer le flux vecteur d'énergie (1), les hydrocarbures du flux vecteur d'énergie (1) lesquels comportent au moins deux atomes de carbone étant transformés, au sein du dispositif de pré-reformage (2) et au moyen d'un reformage à la vapeur, en méthane, hydrogène et oxydes de carbone pour ainsi obtenir un flux désulfurisé contenant du méthane (3), le dispositif de pré-reformage (2) comportant un système catalytique (4) destiné à catalyser le reformage à la vapeur, le système catalytique (4) comportant un pré-catalyseur (5) destiné à catalyser le reformage à la vapeur dans une enceinte de pré-catalyseur (6) et un catalyseur principal (7) destiné à catalyser le reformage à la vapeur dans une enceinte de catalyseur principal (8), l'enceinte de pré-catalyseur (6) étant disposée à distance de l'enceinte de catalyseur principal (8), et le flux vecteur d'énergie (1) passant d'abord par l'enceinte de pré-catalyseur (6) et ensuite par l'enceinte de catalyseur principal (8), **caractérisé en ce que** l'on mesure le degré de dégradation du pré-catalyseur (5) et que l'on sépare, lorsque le degré de dégradation mesuré dépasse un seuil de dégradation, l'enceinte de pré-catalyseur (6) du flux vecteur d'énergie (1).

2. Procédé selon la revendication 1, **caractérisé en ce que** le pré-catalyseur (5) comporte un matériau de support et un métal actif, ledit métal actif comprenant du nickel, du cobalt, du platine, du palladium, de l'iridium, du ruthénium et/ou du rhodium, que ledit matériau de support comprend préférentiellement de l'oxyde d'aluminium ou des aluminates de métaux alcalino-terreux, que ledit métal actif présente notamment une surface spécifique, rapportée à sa masse, d'au moins 15 m²/g.

3. Procédé selon les revendications 1 ou 2, **caractérisé en ce que** les catalyseur principal (7) comporte un métal actif lequel correspond sensiblement au métal actif du pré-catalyseur (5), que le catalyseur comporte préférentiellement un matériau de support correspondant sensiblement au matériau de support du pré-catalyseur (5), que les propriétés matérielles du catalyseur principal (7) correspondent notamment sensiblement à celles du pré-catalyseur (5).

4. Procédé selon l'une des revendications 1 à 3, **caractérisé en ce que** le reformage à la vapeur qui est catalysé par le pré-catalyseur (5) se produit à une température comprise entre 400 °C et 550 °C, que le reformage à la vapeur qui est catalysé par le catalyseur principal (7) se produit à une température correspondant sensiblement à la température du reformage à la vapeur qui est catalysé par le pré-catalyseur (5).

5. Procédé selon l'une des revendications 1 à 4, **caractérisé en ce que** l'enceinte de pré-catalyseur (6) comporte une chambre de pré-réaction sensiblement fermée qui est destinée à recevoir le pré-catalyseur (5) et/ou que l'enceinte de catalyseur principal (8) comporte une chambre de réaction principale sensiblement fermée qui est destinée à recevoir le catalyseur principal (7), la chambre de réaction principale étant préférentiellement disposée à distance de la chambre de pré-réaction.

6. Procédé selon l'une des revendications 1 à 5, **caractérisé en ce que** l'enceinte de pré-catalyseur (6) est séparée de l'enceinte de catalyseur principal (8) par au moins une paroi, que le dispositif de pré-reformage (2) comporte préférentiellement une conduite (12), notamment de forme tubulaire, permettant d'envoyer le flux vecteur d'énergie (1) depuis l'enceinte de pré-catalyseur (6) vers l'enceinte de catalyseur principal (8).

7. Procédé selon l'une des revendications 1 à 6, **caractérisé en ce que** le système catalytique (4) comporte un pré-catalyseur supplémentaire (13) qui est destiné à catalyser, dans une enceinte de pré-catalyseur supplémentaire (14) faisant notamment partie du dispositif de pré-reformage (2), le reformage à la vapeur, ladite enceinte de pré-catalyseur supplémentaire (14) étant disposée à distance de l'enceinte de pré-catalyseur (6) et que le flux vecteur d'énergie (1) est envoyé, au moyen d'un système de vannes (15) commutable, alternativement à travers l'enceinte de pré-catalyseur (6) et l'enceinte de pré-catalyseur supplémentaire (14) disposées en amont de l'enceinte de catalyseur principal (7), que les propriétés matérielles du pré-catalyseur supplémentaire (13) correspondent de préférence sensiblement à celles du pré-catalyseur (5).

8. Procédé selon l'une des revendications 1 à 7, **caractérisé en ce que**, suite à la séparation de l'enceinte de pré-catalyseur (6) du flux vecteur d'énergie (1), le pré-catalyseur (5) dans l'enceinte de pré-catalyseur (6) est remplacé par un nouveau pré-catalyseur (5).

9. Procédé selon la revendication 8, **caractérisé en ce que** l'enceinte de pré-catalyseur (6) est séparée du flux vecteur d'énergie (1) en commutant le système de vannes (15) de manière à ce que le flux vecteur d'énergie (1) soit envoyé à travers l'enceinte de pré-catalyseur supplémentaire (14), que la commutation du système de vannes (15) provoque préférentiellement un arrêt du reformage à la vapeur dans l'enceinte de pré-catalyseur (6) .

10. Procédé selon la revendication 8 ou 9, **caractérisé en ce que** la mesure du degré de dégradation du pré-catalyseur (5) comprend la mesure d'un gradient de température le long d'un itinéraire d'écoulement au sein du pré-catalyseur (5), que le seuil de dégradation est préférentiellement dépassé lorsque la valeur maximale du gradient de température mesuré tombe en-dessous d'un seuil de gradient.

11. Procédé selon l'une des revendications 1 à 10, **caractérisé en ce que** le pré-catalyseur (5) comporte une masse et/ou un volume qui est inférieur(e) à celle/celui du catalyseur principal (7).

12. Procédé selon l'une des revendications 1 à 11, **caractérisé en ce que** le flux contenant du méthane (3) est introduit dans un système de réacteur de gaz de synthèse afin de transformer le méthane issu du flux contenant du méthane (3) et ainsi obtenir un flux de gaz de synthèse (17) comportant de l'hydrogène et des oxydes de carbone.

13. Procédé selon l'une des revendications 1 à 12, **caractérisé en ce que** le flux vecteur d'énergie contenant du carbone (19) est introduit, en amont du dispositif de pré-reformage (2), dans un dispositif de saturation (18) afin d'y être enrichi en vapeur d'eau, que le flux vecteur d'énergie contenant du carbone (1) est préférentiellement introduit, en amont du dispositif de pré-reformage (2), dans un système de chauffage (19) afin d'y réchauffer le flux vecteur d'énergie (1), que le flux contenant du méthane (3) est notamment introduit, en amont du système de réacteur de gaz de synthèse (16), dans un système de chauffage supplémentaire (20) afin d'y réchauffer le flux contenant du méthane (3).

14. Installation permettant de désulfuriser un flux vecteur d'énergie contenant du carbone (1) au moyen d'un dispositif de pré-reformage (2) destiné à pré-reformer le flux vecteur d'énergie contenant du carbone (1) et ainsi obtenir une flux désulfurisé contenant du méthane (3), les hydrocarbures du flux vecteur d'énergie (1) lesquels comportent au moins deux atomes de carbone étant transformé, au sein du dispositif de pré-reformage (2) et au moyen d'un reformage à la vapeur, en méthane, hydrogène et oxydes de carbone, le dispositif de pré-reformage (2) comportant un système catalytique (4) destiné à catalyser le reformage à la vapeur, le système catalytique (4) comportant un pré-catalyseur (5) destiné à catalyser le reformage à la vapeur dans une enceinte de pré-catalyseur (6) faisant partie du dispositif de pré-reformage (2) et un catalyseur principal (7) destiné à catalyser le reformage à la vapeur dans une enceinte de catalyseur principal (8) faisant partie du dispositif de pré-reformage (2), l'enceinte de pré-catalyseur (6) étant disposée à distance de l'enceinte de catalyseur principal (8), et le flux vecteur d'énergie (1) passant d'abord par l'enceinte de pré-catalyseur (6) et ensuite par l'enceinte de catalyseur principal (8), **caractérisé en ce que** l'on mesure le degré de dégradation du pré-catalyseur (5) et que l'on sépare, lorsque le degré de dégradation mesuré dépasse un seuil de dégradation, l'enceinte de pré-catalyseur (6) du flux vecteur d'énergie (1).
